# EUROPEAN PATENT APPLICATION

(11) **EP 4 531 142 A1**
(43) Date of publication of application: **02.04.2025**
(21) Application number: 23941826.2
(22) Date of filing: 28.09.2023
(51) Int. Cl.: H01M 4/525, H01M 4/505, H01M 4/131, H01M 4/1315, H01M 10/0525, C01G 53/00, C01F 7/021, C01B 19/00

(54) **POSITIVE ELECTRODE ACTIVE MATERIAL AND PREPARATION METHOD THEREFOR, POSITIVE ELECTRODE SHEET AND SECONDARY BATTERY**

(30) Priority: 04.07.2023 CN 202310809840
(71) Applicant: Ningbo Ronbay New Energy Technology Co., Ltd., Yuyao Ningbo, Zhejiang 315402 (CN)
(72) Inventor: DONG, Liangchen, Ningbo Zhejiang 315402 (CN); ZHANG, Wenxu, Ningbo Zhejiang 315402 (CN); YIN, Chong, Ningbo Zhejiang 315402 (CN); LIU, Leilei, Ningbo Zhejiang 315402 (CN); CHEN, Yu, Ningbo Zhejiang 315402 (CN); FENG, Daoyan, Ningbo Zhejiang 315402 (CN); YAN, Xufeng, Ningbo Zhejiang 315402 (CN); LIU, Rui, Ningbo Zhejiang 315402 (CN); LEE, Jonghee, Ningbo Zhejiang 315402 (CN); SUN, Hui, Ningbo Zhejiang 315402 (CN); YOU, Sangyul, Ningbo Zhejiang 315402 (CN)
(74) Representative: Bandpay & Greuter
(86) International application number: PCT/CN2023/122870
(87) International publication number: WO 2025/007438

(57) **Abstract**

The present application relates to a positive electrode active material and a preparation method thereof, a positive electrode sheet and a secondary battery. The positive electrode active material has a composition chemical formula of LiₓNa₁₋ₓA_{y}B_{1-y}O₂₋ₙDₙ, where A is selected from a combination of Ni and Mn, B is selected from at least one non-alkali metal positive-valent element other than Ni, Mn, Co, and S, D is selected from F and/or S, 0.8≤x≤ 0.92, 0.90≤y< 1.0, 0<n≤0.2, and a peak position difference between the Ni-O bond and the Mn-O bond of the positive electrode active material in a Raman spectrum is greater than 80cm⁻¹ and less than 110cm⁻¹. The positive electrode active material has high specific capacity and high cycle stability at a high voltage window, and low cost, causing the prepared secondary battery to have high cost performance.

## Description

The present application claims priority to Chinese Patent Application No. 202310809840.1, filed with China National Intellectual Property Administration on July 4, 2023, and entitled "POSITIVE ELECTRODE ACTIVE MATERIAL AND PREPARATION METHOD THEREOF, POSITIVE ELECTRODE SHEET AND SECONDARY BATTERY", the content of which is hereby incorporated by reference in its entirety.

### TECHNICAL FIELD

The present application relates to the technical field of lithium-ion battery, and in particular to a positive electrode active material and preparation method thereof, a positive electrode sheet and a secondary battery.

### BACKGROUND

The main body of a lithium-ion battery is composed of four parts: positive electrode, negative electrode, separator and electrolyte. The performance of positive electrode material plays a decisive role in battery performance. Improving the performance of positive electrode material such as specific capacity, power performance and voltage, and trying to reduce its cost are the eternal themes of positive electrode material development.

From the perspective of crystal structure, the positive electrode materials of lithium-ion battery mainly include an olivine-structured phosphate system and a layered transition-metal-oxide system. Among them, the phosphate system is represented by the lithium iron phosphate positive electrode, which has low cost but limited energy density and power performance. Although the layered transition-metal-oxide system has high energy density and excellent power performance, its cost is relatively high. In addition, there are spinel positive electrode materials represented by lithium manganate, but their energy density is low and their high temperature performance is poor.

From the perspective of elemental composition, although traditional ternary positive electrode materials have good stability and rate performance, it is difficult to further reduce their costs. Therefore, it is necessary to continue to develop new high-energy, low-cost positive electrode materials for lithium-ion battery.

### SUMMARY

Based on this, it is necessary to provide a positive electrode active material and its preparation method, a positive electrode sheet and a secondary battery to address the above problems; the positive electrode active material not only has a high specific capacity and high cycle stability in a high-voltage window, but also has a low cost, so that the secondary battery prepared therefrom has high cost performance.

A positive electrode active material has a composition chemical formula of LiₓNa₁₋ₓA_{y}B_{1-y}O₂₋ₙDₙ, where A is selected from a combination of Ni and Mn, B is selected from at least one non-alkali metal positive-valent element other than Ni, Mn, Co, and S, D is selected from F and/or S, x is greater than or equal to 0.8 and less than or equal to 0.92, y is greater than or equal to 0.90 and less than 1.0, n is greater than 0 and less than or equal to 0.2, and a peak position difference between a Ni-O bond and a Mn-O bond of the positive electrode active material in a Raman spectrum is greater than 80cm⁻¹ and less than 110cm⁻¹.

In one example, a molar ratio of Ni to Mn is 3:7 to 1: 1.

In one example, B is selected from at least one of Mg, Al, Zr, Ce, Cr, La, P, Ti, Ta, Nb, W, Mo, and Te.

In one example, B includes at least Nb or Mo, and D includes at least F.

In one example, a crystal structure of the positive electrode active material is a lithiated spinel-layered composite crystal structure.

In one example, a crystal structure surface of the positive electrode active material further has a coating layer, and the coating layer is selected from at least one of an inert oxide coating layer, a lithium-containing transition metal oxide coating layer, a phosphate coating layer, and a fluoride coating layer.

In one example, when the peak position difference between the Ni-O bond and the Mn-O bond of the positive electrode active material in the Raman spectrum is less than 110cm⁻¹ and greater than 100cm⁻¹, the coating layer is selected from at least one of an inert oxide coating layer, a phosphate coating, and a fluoride coating layer.

In one example, when the peak position difference between the Ni-O bond and the Mn-O bond of the positive electrode active material in the Raman spectrum is greater than 80cm⁻¹ and less than or equal to 100cm⁻¹, the coating layer is selected from the lithium-containing transition metal oxide coating layer.

In one example, a coating amount of the coating layer is 0.5wt%-1wt% of a mass of the positive electrode active material;
and/or, the inert oxide coating layer is selected from a composite of Al₂O₃ and TiO₂;
and/or, the lithium-containing transition metal oxide coating layer is selected from Li₁₊ₐZrO₂₊ₐ, where a is greater than 0 and less than or equal to 1.0;
and/or, the fluoride coating layer is selected from MgF₂.

A method for preparing the positive electrode active material as described above includes the following steps:
preparing a composite metal salt precursor of Ni and Mn;
taking LiₓNa₁₋ₓA_{y}B_{1-y}O₂₋ₙDₙ as a benchmark, where x is greater than or equal to 0.8 and less than or equal to 0.92, y is greater than or equal to 0.90 and less than 1.0, and n is greater than 0 and less than or equal to 0.2, and mixing the composite metal salt precursor of Ni and Mn with a lithium salt, a sodium salt, and an inorganic salt containing any non-alkali metal positive-valent element except Ni, Mn, Co and S to obtain a mixture, where at least one of the lithium salt, the sodium salt and the inorganic salt contains a negative-valent element D, the negative-valent element D being selected from F and/or S;
sintering the mixture at 300°C to 500 ° C to obtain the positive electrode active material.

In one example, the molar ratio of Ni to Mn in the composite metal salt precursor of Ni and Mn is 3:7 to 1:1;
and/or, a molar amount of lithium in the lithium salt is within an excess of 5mol% relative to the benchmark;
and/or, a sintering time is 10h to 30h.

In one example, the lithium salt is selected from at least two of lithium carbonate, lithium hydroxide, lithium oxalate, lithium nitrate, and lithium fluoride;
and/or, the sodium salt is selected from at least one of sodium carbonate, sodium oxalate and sodium sulfide.

In one example, when the lithium salt is selected from a combination of lithium carbonate and lithium oxalate, a molar ratio of the lithium carbonate to the lithium oxalate is 1:2 to 2:1.

In one example, after the mixture is sintered at 300°C to 500°C for 10h to 30h, the method further includes a coating treatment, and a coating treatment temperature is 300°C to 400°C.

A positive electrode sheet includes a positive electrode current collector and a positive electrode material layer disposed on a surface of the positive electrode current collector, where the positive electrode material layer includes the positive electrode active material described above.

A secondary battery includes the positive electrode sheet as described above.

For the positive electrode active material of the present application, by adjusting the sum of the atomic weights of Li and Na to be the same as the sum of the atomic weights of A and B, i.e. achieving 1 to 1, at the same time, regulating the peak position difference between the Ni-O bond and the Mn-O bond to be greater than 80cm⁻¹ and less than 110cm⁻¹, it can be seen that under the synergistic effect of A and B at a specific proportion, oxygen element and negative-valent element D, the positive electrode active material is capable of having the characteristics of local cation disorder. On the one hand, it is possible to make the positive electrode active material have both high specific capacity and high rate capability, and other functional characteristics. On the other hand, it is possible to enhance the structural stability of the positive electrode active material, reduce the effect of interfacial side reactions, and improve the ionic conductivity, thereby improving the cycle stability of positive electrode active material, so that the specific capacity and stability of positive electrode active material can achieve a performance balance, and the positive electrode active material can have both high specific capacity and high cycle stability in the high voltage window. In addition, the positive electrode active material can also reduce the watt-hour cost by about 5%.

Therefore, the positive electrode active material of the present application shows high energy density and high cost performance. When the positive electrode active material is used to prepare a positive electrode sheet and form a secondary battery, the secondary battery can have more excellent electrical properties and higher cost performance, which is conducive to improving the market competitiveness of the positive electrode active material.

### BRIEF DESCRIPTION OF DRAWINGS

FIG. 1 is an EDS spectrum of a positive electrode active material prepared in Example 1.
FIG. 2 is a Raman spectrum comparison diagram of the positive electrode active material prepared in Example 1 and a typical spinel-type LiNi_{0.5}Mn_{1.5}O₄, where plot **a** is a Raman spectrum diagram of the positive electrode active material prepared in Example 1, and plot **b** is a Raman spectrum diagram of the typical spinel-type LiNi_{0.5}Mn_{1.5}O₄.
FIG. 3 is an XRD pattern of a positive electrode active material prepared in Example 1, Example 2 and Example 12, where plot **a** is the diffraction pattern of the positive electrode active material prepared in Example 1, plot **b** is the diffraction pattern of the positive electrode active material prepared in Example 2, and plot **c** is the diffraction pattern of the positive electrode active material prepared in Example 12.
FIG. 4 is a comparison diagram of charge-discharge curves of the positive electrode active material prepared in Example 1 and a typical ternary layered LiNi_{0.5}Mn_{0.5}O₂, and the typical spinel-type LiNi_{0.5}Mn_{1.5}O₄ at a current of 40mAg⁻¹ in a first-cycle, where plot **a** is the positive electrode active material prepared in Example 1, plot **b** is the typical ternary layered LiNi_{0.5}Mn_{0.5}O₂, and plot c is the typical spinel-type LiNi_{0.5}Mn_{1.5}O₄.
Fig. 5 is a charge-discharge curve of Sample 1, where plot **a** is a first-cycle charge-discharge curve at a voltage range of 2.5V to 4.7V and a rate of 0.2C, and plot **b** is a charge-discharge curve at a voltage range of 2.5V to 4.7V and a rate of 0.5C.
Fig. 6 is a charge-discharge curve of Sample 2, where plot **a** is a first-cycle charge-discharge curve at a voltage range of 2.5V to 4.7V and a rate of 0.2C, and plot **b** is a charge-discharge curve at a voltage range of 2.5V to 4.7V and a rate of 0.5C.
Fig. 7 is a charge-discharge curve of Sample 16, where plot **a** is a first-cycle charge-discharge curve at a voltage range of 2.5V to 4.7V and a rate of 0.2C, and plot **b** is a charge-discharge curve at a voltage range of 2.5V to 4.7V and a rate of 0.5C.
Fig. 8 is a charge-discharge curve of Sample 17, where plot **a** is a first-cycle charge-discharge curve at a voltage range of 2.5V to 4.7V and a rate of 0.2C, and plot **b** is a charge-discharge curve at a voltage range of 2.5V to 4.7V and a rate of 0.5C.

### DESCRIPTION OF EMBODIMENTS

In order to facilitate understanding of the present application, the present application will be described in more detail below. However, it should be understood that the present application can be implemented in many different forms and is not limited to the embodiments or examples described herein. On the contrary, the purpose of providing these embodiments or examples is to make the understanding of the disclosed contents of the present application more thorough and comprehensive.

Unless defined otherwise, all technical and scientific terms used herein have the same meaning as commonly understood by one of ordinary skill in the art to which this application belongs. The terms used in the specification of the present application herein are only for the purpose of describing specific implementations or embodiments and are not intended to limit the present application.

The present application provides a positive electrode active material, having a composition chemical formula of LiₓNa₁₋ₓA_{y}B_{1-y}O₂₋ₙDₙ, where A is selected from a combination of Ni and Mn; B is selected from at least one non-alkali metal positive-valent element other than Ni, Mn, Co, and S; D is selected from F and/or S; x is greater than or equal to 0.8 and less than or equal to 0.92, y is greater than or equal to 0.90 and less than 1.0, n is greater than 0 and less than or equal to 0.2; and the peak position difference between the Ni-O bond and the Mn-O bond of the positive electrode active material in the Raman spectrum is greater than 80cm⁻¹ and less than 110cm⁻¹.

For the positive electrode active material, by adjusting the sum of the atomic weights of Li and Na to be the same as the sum of the atomic weights of A and B, i.e. achieving 1 to 1, at the same time, regulating the peak position difference between the Ni-O bond and the Mn-O bond to be greater than 80cm⁻¹ and less than 110cm⁻¹, it can be seen that under the synergistic effect of A and B at a specific proportion, oxygen element and negative-valent element D, the positive electrode active material is capable of having the characteristics of local cation disorder. On the one hand, it is possible to make the positive electrode active material have both high specific capacity and high rate capability, and other functional characteristics. On the other hand, it is possible to enhance the structural stability of the positive electrode active material, reduce the effect of interfacial side reactions, and improve the ionic conductivity, thereby improving the cycle stability of positive electrode active material, so that the specific capacity and stability of positive electrode active material can achieve a performance balance, and the positive electrode active material can have both high specific capacity and high cycle stability in the high voltage window. In addition, the positive electrode active material can also reduce the watt-hour cost by about 5%. Therefore, the positive electrode active material of the present application shows high energy density and high cost performance.

Preferably, the molar ratio of Ni to Mn in the positive electrode active material is 3:7 to 1:1, which can not only make the nickel content of the positive electrode active material lower than that of traditional ternary material, thereby making the positive electrode active material safer and less expensive, but also ensure the performance of voltage platform and rate performance of the positive electrode active material and inhibit its voltage attenuation.

Further preferably, the molar ratio of Ni to Mn includes but is not limited to 3:7, 2:3, 9:11, or 1:1.

In this application, under the specific ratio of the composition chemical formula, B is beneficial to stabilizing the structure and reducing interface side reactions, which is further beneficial to improving the cycle stability of the positive electrode active material, reducing battery gas production, reducing the growth of direct current internal resistance (DCIR), and increasing high-temperature storage life.

Preferably, B is selected from at least one of Mg, Al, Zr, Ce, Cr, La, P, Ti, Ta, Nb, W, Mo, and Te.

It should be noted that in the positive electrode active material, B includes various existence forms such as doping, coating, or coexistence of doping and coating, which is not limited in this application.

When B exists in the form of doping, B is preferably at least one of Al, Cr, and Ti, which is easier for B to enter into the crystal lattice and is beneficial to strengthening the Ni-O bond and the Mn-O bond; B is preferably at least one of Zr, La, and P, which is easier for B to be enriched on the subsurface layer and is beneficial to resisting electrolyte corrosion; B is preferably at least one of Ta, Nb, W, Mo, Te, and Ce, which is more easier for B to be enriched at the grain boundary and is beneficial to improving its interface stability.

When B exists in the form of coating, since the positive electrode active material is a secondary particle structure formed by the agglomeration of primary particles, B will be more enriched on the surface of the secondary particle, which is beneficial to improving the interface stability and the ionic conductivity.

Further, B is preferably a high-valent element with a valence of +5 or more. On the one hand, the high-valent element has a higher energy for binding with oxygen, which is beneficial to enhancing the stability of the anion framework during the charge-discharge process; on the other hand, the valence state of the Mn element can be reduced so that Mn can also provide part of capacity, thereby compensating for the capacity loss caused by the reduced activity of oxygen ions. In addition, the high-valent element is also beneficial for regulating the size of primary particles, thereby improving the microstructure of the positive electrode active material.

In the present application, under the specific ratio of the composition chemical formula, each of F and S also includes various existence forms such as doping and coating, where F doping can reduce the energy barrier and disorder degree of the reaction process; and because the electronegativity of F is stronger than that of oxygen ions, its binding energy with cations is higher, and F doping can also improve the material interface stability, thereby enhancing the material framework stability. F coating can prevent the invasion of F ions in the electrolyte to a certain extent, and improve the stability of the long-cycle system of battery. Although S doping has limited effect on the disorder degree of material, S can provide electrons for oxygen ions at high voltage and inhibit the formation of oxygen due to excessive oxidation of oxygen ions, thereby avoiding the degradation of the positive electrode material and the oxidative decomposition of electrolyte, so S doping and S coating can also stabilize the anionic framework.

Further preferably, in the positive electrode active material, B includes at least Nb or Mo, and D includes at least F, which is more conducive to improving its interface stability and making the positive electrode active material have more excellent cycle stability at a high voltage window.

In one embodiment, the crystal structure of the positive electrode active material is a lithiated spinel-layered composite crystal structure.

In another embodiment, the crystal structure surface of the positive electrode active material further has a coating layer, and the coating layer is selected from at least one of an inert oxide coating layer, a lithium-containing transition metal oxide coating layer, a phosphate coating layer, and a fluoride coating layer, which is beneficial to reducing the erosion of the positive electrode active material by the electrolyte during the cycle process, protecting the surface structure from damage, and thus improving the long-cycle stability.

When the peak position difference between the Ni-O bond and the Mn-O bond of the positive electrode active material in the Raman spectrum is less than 110cm⁻¹ and greater than 100cm⁻¹, the disorder degree is high and the structural stability is high, which is conducive to utilization of the capacity and rate performance of the battery. the coating layer is preferably at least one of the inert oxide coating layer, the phosphate coating layer, and the fluoride coating layer, which can effectively weaken the interface side reaction caused by the corrosion of the material surface by the electrolyte, thereby improving the stability of the battery system.

When the peak position difference between the Ni-O bond and the Mn-O bond of the positive electrode active material in the Raman spectrum is greater than 80cm⁻¹ and less than or equal to 100cm⁻¹, the disorder degree is moderate and the structural stability is also high. the coating layer is preferably the lithium-containing transition metal oxide coating layer, which is beneficial to improving the interface stability, reducing the interface side reaction, effectively improving the lithium ion transport capacity of the material, and further conducive to utilization of the capacity and rate performance of the battery.

Preferably, the coating amount of the coating layer is 0.5wt%-1wt% of the mass of the positive electrode active material.

Specifically, the inert oxide coating layer is preferably a composite of Al₂O₃ and TiO₂; and/or, the lithium-containing transition metal oxide coating layer is preferably Li₁₊ₐZrO₂₊ₐ, where a is greater than 0 and less than or equal to 1.0; and/or, the fluoride coating layer is preferably MgF₂.

Therefore, the positive electrode active material not only has both high specific capacity and high cycle stability at the high voltage window, but also has low cost, showing high energy density and high cost performance, and making the positive electrode active material more competitive in the market.

The present application provides a method for preparing the positive electrode active material as described above, including the following steps:
S1, preparing a composite metal salt precursor of Ni and Mn;
S2, taking LiₓNa₁₋ₓA_{y}B_{1-y}O₂₋ₙDₙ as a benchmark, where x is greater than or equal to 0.8 and less than or equal to 0.92, y is greater than or equal to 0.90 and less than 1.0, and n is greater than 0 and less than or equal to 0.2, and mixing the composite metal salt precursor of Ni and Mn with a lithium salt, a sodium salt and an inorganic salt containing any non-alkali metal positive-valent element except Ni, Mn, Co and S to obtain a mixture, where at least one of the lithium salt, the sodium salt and the inorganic salt contains a negative-valent element D, and the negative-valent element D is selected from F and/or S;
S3, sintering the mixture at 300°C to 500°C to obtain the positive electrode active material.

In step S1, the method for preparing the composite metal salt precursor of Ni and Mn adopts the existing preparation process, including but not limited to a co-precipitation method, which will not be repeated in this application; and those skilled in the art can make a selection according to actual preparation requirements.

Preferably, the molar ratio of Ni to Mn in the composite metal salt precursor of Ni and Mn is 3:7 to 1:1.

In step S2, using a combination of two alkali metal salts which are lithium salt and sodium salt can not only reduce the melting temperature of the system, promote the full fusion and reaction of alkali metals and transition metal salts under a low temperature condition and improve structural consistency and stability, but also ensure that the system has a certain disorder degree of local cation at a sintering temperature of 300°C to 500°C, thereby ensuring its characteristics of high capacity and high voltage stability.

Considering that there is a certain lithium loss in the preparation process, it is preferable that the molar amount of lithium in the lithium salt is within an excess of 5mol% relative to the benchmark.

Specifically, the lithium salt is selected from at least two of lithium carbonate, lithium hydroxide, lithium oxalate, lithium nitrate, and lithium fluoride. The eutectic system composed of different types of lithium salts has a lower melting point than a single lithium salt. On the one hand, it helps to shorten the sintering time. On the other hand, multiple lithium salts are combined in a flexible way to obtain a mixed lithium salt system with different melting points, achieving the effect of regulating the disorder degree of the material.

When the lithium carbonate is preferred as the main lithium salt, since the lithium carbonate decomposes slowly and has a high decomposition energy at a sintering temperature of 300°C to 500°C, the energy of the reaction system is insufficient to promote the rapid transformation of cations from a disordered state to an ordered state. Therefore, a sintering time of 10h to 30h can allow the lithium carbonate to react completely without reducing the disorder degree of the cations, thereby ensuring that the prepared positive electrode active material has a higher disorder degree.

Further preferably, the lithium salt is selected from a combination of lithium carbonate and lithium oxalate, and the molar ratio of the lithium carbonate to the lithium oxalate is 1:2 to 2:1, which can make the performance of the positive electrode active material better.

The sodium salt is selected from at least one of sodium carbonate, sodium oxalate, and sodium sulfide, preferably sodium oxalate. Since lithium salt and sodium salt have low melting points, it is possible to effectively reduce the sintering temperature, increase the disorder degree of the material, and promote the rapid penetration of alkali metals, effectively reducing the amount of residual alkali on the surface of the single-sintering sample, allowing it to meet the requirements of industrial application and eliminating the processing problems such as formation of jelly during homogenization.

In step S3, by adjusting the sintering temperature, it is possible to allow Li and Na alkali metals to completely penetrate into the composite metal salt precursor of Ni and Mn and react evenly, reducing lithium loss, and ensuring that the cations have a certain disorder degree, making the local cations in the positive electrode active material disordered, thereby improving the performance of the positive electrode active material. Preferably, the sintering temperature is 350°C to 400°C or 400°C to 450°C.

Preferably, the sintering time is 10h to 30h, more preferably 15h to 25h, which can make the positive electrode active material have a more suitable disorder degree.

In one embodiment, after the mixture is sintered at 300°C to 500°C for 10h to 30h, it is washed with water and/or sintered again to remove alkaline impurities remaining on the surface of the sintered product.

In another embodiment, after the mixture is sintered at 300°C to 500°C for 10h to 30h, a coating treatment is further included, with the coating treatment temperature being 300°C to 400°C.

When lithium remains on the surface of the sintered product, the residual lithium can be directly coated with the lithium-containing transition metal oxide through coating treatment, thereby achieving direct conversion and utilization of the residual lithium.

It should be noted that the mixture may be washed with water or sintered again and then coated, or the mixture may be directly coated after sintering, which is not limited herein in the present application.

It can be understood that in the prepared positive electrode active material, the ratio of the sum of the atomic weights of Li Na, the sum of the atomic weights of A B, and the sum of the atomic weights of negative-valent elements fluctuates within ±3% relative to the theoretical value of 1: 1:2.

The present application also provides a positive electrode sheet, including a positive electrode current collector and a positive electrode material layer disposed on a surface of the positive electrode current collector, where the positive electrode material layer includes the positive electrode active material as described above.

In one embodiment, the positive electrode material layer further includes a conductive agent and a binder.

The present application provides a secondary battery, which includes the positive electrode sheet as described above.

In one embodiment, the secondary battery further includes a negative electrode sheet, a separator and an electrolyte.

Hereinafter, the positive electrode active material and its preparation method, the positive electrode sheet and the secondary battery will be further described through the following specific examples.

### Example 1

The composite metal salt precursor Ni_{0.3}Mn_{0.7}(OH)₂ is prepared by co-precipitation method.

Taking the stoichiometric ratio of Li_{0.9}Na_{0.1}(Ni_{0.3}Mn_{0.7})_{0.98}Nb_{0.02}O_{1.8}F_{0.2} as a benchmark, Ni_{0.3}Mn_{0.7}(OH)₂ is fully mixed with Li₂CO₃, LiF, Na₂C₂O₄, and Nb₂O₅ to obtain a mixture, where the total molar amount of Li in Li₂CO₃ and LiF is in excess of the benchmark by 3mol%.

The mixture is sintered at 425°C in an air atmosphere for 25h. After the sintering is completed, the sintered material is washed with water to remove alkaline impurities remained on the surface and then dried in the air atmosphere. Then, the water-washed material is mixed with Al₂O₃ and subjected to a coating treatment, the temperature of the coating treatment being 350 ° C, obtaining a positive electrode active material. The positive electrode active material has an Al₂O₃ coating layer, and the coating amount of Al₂O₃ is 0.5wt% of the mass of the positive electrode active material.

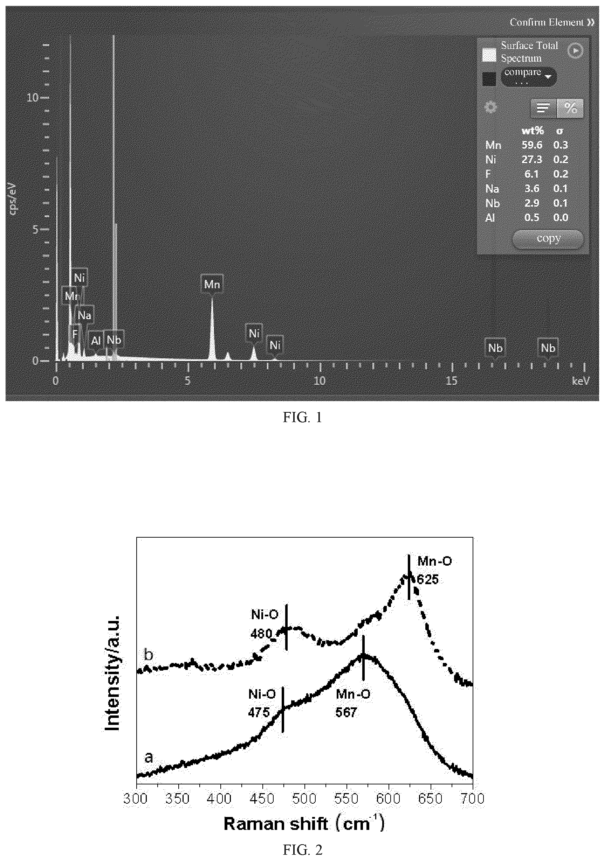

The prepared positive electrode active material is subjected to EDS energy spectrum analysis, and the results are shown in FIG. 1. Since EDS cannot accurately quantify the mass proportion of lithium elements, by further combination with ICP element analysis in Table 1 (it should be noted that there is a difference in the calculation mode of the mass proportion of elements in EDS and ICP, where EDS takes the mass proportion of the selected element as 100%, while ICP takes the total mass of the entire sample shown in the molecular formula as 100%), the corresponding atomic weight proportions are calculated based on the mass proportion of each element. Based on the fact that the difference in the atomic weight ratio between each element composition of the prepared positive electrode active material and the theoretical finished product element is within ±3%, it can be proved that the prepared positive electrode active material is Li_{0.9}Na_{0.1}(Ni_{0.3}Mn_{0.7})_{0.98}Nb_{0.02}O_{1.8}F_{0.2} with a Al₂O₃ coating layer, which is consistent with the design value.

The Raman spectra of the prepared positive electrode active material and the typical spinel-type LiNi_{0.5}Mn_{1.5}O₄ are compared and analyzed, and the results are shown in FIG. 2, where plot a is the Raman spectrum of the prepared positive electrode active material, and plot b is the Raman spectrum of the typical spinel-type LiNi_{0.5}Mn_{1.5}O₄. According to FIG. 2, it can be known that the peak position of Ni-O bond in the prepared positive electrode active material is 475cm⁻¹. Compared with the typical spinel-type LiNi_{0.5}Mn_{1.5}O₄, the peak position of Ni-O bond has almost no change; while the peak position of Mn-O bond is 567cm⁻¹, showing an obvious shift, with the peak significantly being shifted left and close to the Ni-O bond and almost forming a large merged peak with the Ni-O bond peak, indicating that the relative position difference among Mn, Ni and lithium is reduced, and the disorder degree is reduced. At this time, the peak position difference between the Ni-O bond and the Mn-O bond is about 90cm⁻¹, which is lower than that of the typical spinel-type LiNi_{0.5}Mn_{1.5}O₄ by about 50cm⁻¹, so as to distinguish the prepared positive electrode active material from traditional spinel material. Moreover, in traditional layered material, nickel and manganese are alternately arranged in the transition metal layer, and there is no significant difference in their relative arrangement relative to lithium; therefore, the Ni-O bond and the Mn-O bond outside the nucleus usually form one merged peak, which is difficult to distinguish them. The peak position difference between the Ni-O bond and the Mn-O bond of the positive electrode active material prepared in this example is about 90cm⁻¹, which is distinguished from traditional ordered layered material. This proves that this example provides a lithiated spinel-layered composite structure material with characteristics of partial cations disorder, which can simultaneously provide the high stability of the spinel structure and the high capacity characteristics of the layered structure.

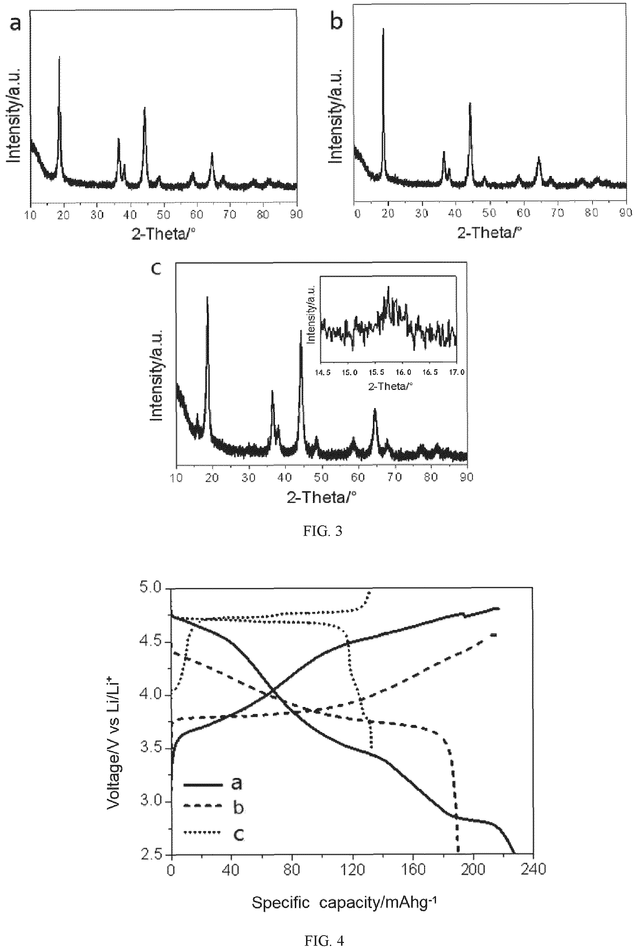

The prepared positive electrode active material is subjected to an X-ray diffraction test, and the result is shown in FIG. 3.

The charge-discharge performance of the prepared positive electrode active material is compared with those of the typical ternary layered LiNi_{0.5}Mn_{0.5}O₂ and the typical spinel-type LiNi_{0.5}Mn_{1.5}O₄, and the results are shown in FIG. 4.

### Example 2

The difference of Example 2 from Example 1 is that the composite metal salt precursor Ni_{0.4}Mn_{0.6}(OH)₂ is prepared, and the positive electrode active material is prepared by taking the stoichiometric ratio of Li_{0.9}Na_{0.1}(Ni_{0.4}Mn_{0.6})_{0.98}Nb_{0.02}O_{1.8}F_{0.2} as a benchmark.

By combining the EDS energy spectrum and the ICP analysis, it can be seen that the prepared positive electrode active material is Li_{0.9}Na_{0.1}(Ni_{0.4}Mn_{0.6})_{0.98}Nb_{0.02}O_{1.8}F_{0.2} with a Al₂O₃ coating layer. According to Raman spectrum analysis, the peak position difference between the Ni-O bond and the Mn-O bond in the prepared positive electrode active material is about 106cm⁻¹.

The prepared positive electrode active material is subjected to an X-ray diffraction test, and the result is shown in FIG. 3.

### Example 3

The difference of Example 3 from Example 1 is that the composite metal salt precursor Ni_{0.45}Mn_{0.55}(OH)₂ is prepared, and the positive electrode active material is prepared by taking the stoichiometric ratio of Li_{0.9}Na_{0.1}(Ni_{0.45}Mn_{0.55})_{0.98}Nb_{0.02}O_{1.8}F_{0.2} as a benchmark.

By combining the EDS energy spectrum and the ICP analysis, it can be seen that the prepared positive electrode active material is Li_{0.9}Na_{0.1}(Ni_{0.45}Mn_{0.55})_{0.98}Nb_{0.02}O_{1.8}F_{0.2} with a Al₂O₃ coating layer. According to Raman spectrum analysis, the peak position difference between the Ni-O bond and the Mn-O bond in the prepared positive electrode active material is about 103cm⁻¹.

### Example 4

The difference of Example 4 from Example 1 is that the composite metal salt precursor Ni_{0.5}Mn_{0.5}(OH)₂ is prepared, and the positive electrode active material is prepared by taking the stoichiometric ratio of Li_{0.9}Na_{0.1}(Ni_{0.5}Mn_{0.5})_{0.98}Nb_{0.02}O_{1.8}F_{0.2} as a benchmark.

By combining the EDS energy spectrum and the ICP analysis, it can be seen that the prepared positive electrode active material is Li_{0.9}Na_{0.1}(Ni_{0.5}Mn_{0.5})_{0.98}Nb_{0.02}O_{1.8}F_{0.2} with a Al₂O₃ coating layer. According to Raman spectrum analysis, the peak position difference between the Ni-O bond and the Mn-O bond in the prepared positive electrode active material is about 105cm⁻¹.

### Example 5

The composite metal salt precursor Ni_{0.4}Mn_{0.6}(OH)₂ is prepared by co-precipitation method.

Taking the stoichiometric ratio of Li_{0.9}Na_{0.1}(Ni_{0.4}Mn_{0.6})_{0.98}Nb_{0.02}O_{1.8}F_{0.2} as a benchmark, Ni_{0.4}Mn_{0.6}(OH)₂ is fully mixed with Li₂CO₃, Li₂C₂O₄, LiF, Na₂C₂O₄ and Nb₂O₅to obtain a mixture, where the total molar amount of Li in Li₂CO₃, Li₂C₂O₄ and LiF is in excess of 3mol% relative to the benchmark, and the molar ratio of Li₂CO₃ to Li₂C₂O₄ is 2: 1.

The mixture is sintered at 425°C in an air atmosphere for 20h. After the sintering is completed, the sintered material is washed with water to remove alkaline impurities remained on the surface and then dried in the air atmosphere. Then, the water-washed material is mixed with Al₂O₃ and subjected to a coating treatment, the temperature of the coating treatment being 350 ° C, obtaining a positive electrode active material. The positive electrode active material has an Al₂O₃ coating layer, and the coating amount of Al₂O₃ is 0.5wt% of the mass of the positive electrode active material.

By combining the EDS energy spectrum and the ICP analysis, it can be seen that the prepared positive electrode active material is Li_{0.9}Na_{0.1}(Ni_{0.4}Mn_{0.6})_{0.98}Nb_{0.02}O_{1.8}F_{0.2} with a Al₂O₃ coating layer. According to Raman spectrum analysis, the peak position difference between the Ni-O bond and the Mn-O bond in the prepared positive electrode active material is about 101cm⁻¹.

### Example 6

The composite metal salt precursor Ni_{0.4}Mn_{0.6}(OH)₂ is prepared by co-precipitation method.

Taking the stoichiometric ratio of Li_{0.9}Na_{0.1}(Ni_{0.4}Mn_{0.6})_{0.98}Nb_{0.02}O_{1.8}F_{0.1}S_{0.1} as a benchmark, Ni_{0.4}Mn_{0.6}(OH)₂ is fully mixed with Li₂CO₃, LiF, Na₂C₂O₄ Nb₂O₅ and Na₂S to obtain a mixture, where the total molar amount of Li in Li₂CO₃ and LiF is in excess of the benchmark by 3mol%.

The mixture is sintered at 425°C in an air atmosphere for 20h. After the sintering is completed, the sintered material is washed with water to remove alkaline impurities remained on the surface and then dried in an air atmosphere. Then, the water-washed material is mixed with Al₂O₃ and subjected to a coating treatment, the temperature of the coating treatment being 350 ° C, obtaining a positive electrode active material. The positive electrode active material has an Al₂O₃ coating layer, and the coating amount of Al₂O₃ is 0.5wt% of the mass of the positive electrode active material.

By combining the EDS energy spectrum and the ICP analysis, it can be seen that the prepared positive electrode active material is Li_{0.9}Na_{0.1}(Ni_{0.4}Mn_{0.6})_{0.98}Nb_{0.02}O_{1.8}F_{0.1}S_{0.1} with an Al₂O₃ coating layer. According to Raman spectrum analysis, the peak position difference between the Ni-O bond and the Mn-O bond in the prepared positive electrode active material is about 102cm⁻¹.

### Example 7

The composite metal salt precursor Ni_{0.4}Mn_{0.6}(OH)₂ is prepared by co-precipitation method.

Taking the stoichiometric ratio of Li_{0.9}Na_{0.1}(Ni_{0.4}Mn_{0.6})_{0.98}Mo_{0.02}O_{1.8}F_{0.2} as a benchmark, Ni_{0.4}Mn_{0.6}(OH)₂ is fully mixed with Li₂CO₃, LiF, Na₂C₂O₄ and Mo₂O₅ to obtain a mixture, where the total molar amount of Li in Li₂CO₃ and LiF is in excess of the benchmark by 3mol%.

The mixture is sintered at 425°C in an air atmosphere for 20h. After the sintering is completed, the sintered material is washed with water to remove alkaline impurities remained on the surface and then dried in an air atmosphere. Then, the water-washed material is mixed with Al₂O₃ and subjected to a coating treatment, the temperature of the coating treatment being 350 ° C, obtaining a positive electrode active material. The positive electrode active material has an Al₂O₃ coating layer, and the coating amount of Al₂O₃ is 0.5wt% of the mass of the positive electrode active material.

By combining the EDS energy spectrum and the ICP analysis, it can be seen that the prepared positive electrode active material is Li_{0.9}Na_{0.1}(Ni_{0.4}Mn_{0.6})_{0.98}Mo_{0.02}O_{1.8}F_{0.2} with an Al₂O₃ coating layer. According to Raman spectrum analysis, the peak position difference between the Ni-O bond and the Mn-O bond in the prepared positive electrode active material is about 103cm⁻¹.

### Example 8

The composite metal salt precursor Ni_{0.4}Mn_{0.6}(OH)₂ is prepared by co-precipitation method.

Taking the stoichiometric ratio of Li_{0.9}Na_{0.1}(Ni_{0.4}Mn_{0.6})_{0.9}Mo_{0.02}Nb_{0.02}Te_{0.02}Ti_{0.02}Al_{0.02}O_{1.8}F_{0.2} as a benchmark, Ni_{0.4}Mn_{0.6}(OH)₂ is fully mixed with Li₂CO₃, LiF, Na₂C₂O₄, Mo₂O₅, Nb₂O₅, TeO₂, and TiO₂ to obtain a mixture, where the total molar amount of Li in Li₂CO₃ and LiF is in excess of the benchmark by 3mol%.

The mixture is sintered at 425°C in an air atmosphere for 22h. After the sintering is completed, the sintered material is washed with water to remove alkaline impurities remained on the surface and then dried in an air atmosphere. Then, the water-washed material is mixed with Al₂O₃ and subjected to a coating treatment, the temperature of the coating treatment being 350 ° C, obtaining a positive electrode active material. The positive electrode active material has an Al₂O₃ coating layer, and the coating amount of Al₂O₃ is 0.5wt% of the mass of the positive electrode active material.

By combining EDS energy spectrum and ICP analysis, it can be seen that the prepared positive electrode active material is Li_{0.9}Na_{0.1}(Ni_{0.4}Mn_{0.6})_{0.9}Mo_{0.02}Nb_{0.02}Te_{0.02}Ti_{0.02}Al_{0.02}O_{1.8}F_{0.2} with a Al₂O₃ coating layer. According to Raman spectrum analysis, the peak position difference between the Ni-O bond and the Mn-O bond in the prepared positive electrode active material is about 106cm⁻¹.

### Example 9

The composite metal salt precursor Ni_{0.4}Mn_{0.6}(OH)₂ is prepared by co-precipitation method.

Taking the stoichiometric ratio of Li_{0.9}Na_{0.1}(Ni_{0.4}Mn_{0.6})_{0.98}Nb_{0.02}O_{1.8}F_{0.2} as a benchmark, Ni_{0.4}Mn_{0.6}(OH)₂ is fully mixed with Li₂CO₃, LiF, Na₂C₂O₄, and Nb₂O₅ to obtain a mixture, where the total molar amount of Li in Li₂CO₃ and LiF is in excess of the benchmark by 3mol%.

The mixture is sintered at 425°C in an air atmosphere for 22h. After the sintering is completed, the sintered material is washed with water to remove alkaline impurities remained on the surface, dried in an air atmosphere, and sintered again at 350°C to obtain a positive electrode active material.

By combining EDS energy spectrum and ICP analysis, it can be seen that the prepared positive electrode active material is Li_{0.9}Na_{0.1}(Ni_{0.4}Mn_{0.6})_{0.98}Nb_{0.02}O_{1.8}F_{0.2}. According to Raman spectrum analysis, the peak position difference between the Ni-O bond and the Mn-O bond in the prepared positive electrode active material is about 96cm⁻¹.

### Example 10

The composite metal salt precursor Ni_{0.4}Mn_{0.6}(OH)₂ is prepared by co-precipitation method.

Taking the stoichiometric ratio of Li_{0.9}Na_{0.1}(Ni_{0.4}Mn_{0.6})_{0.98}Nb_{0.02}O_{1.8}F_{0.2} as a benchmark, Ni_{0.4}Mn_{0.6}(OH)₂ is fully mixed with Li₂CO₃, LiF, Na₂C₂O₄, and Nb₂O₅ to obtain a mixture, where the total molar amount of Li in Li₂CO₃ and LiF is in excess of the benchmark by 3mol%.

The mixture is sintered at 425°C in an air atmosphere for 20h. After the sintering is completed, the sintered material is washed with water to remove alkaline impurities remained on the surface and then dried in an air atmosphere. The water-washed material is then mixed with Al₂O₃ and MgF₂ for coating treatment, the temperature of the coating treatment being350°C, obtaining a positive electrode active material. The positive electrode active material has an Al₂O₃ coating layer and an MgF₂ coating layer. The coating amount of Al₂O₃ is 0.5wt% of the mass of the positive electrode active material, and the coating amount of MgF₂ is 0.5wt% of the mass of the positive electrode active material.

By combining EDS energy spectrum and ICP analysis, it can be seen that the prepared positive electrode active material is Li_{0.9}Na_{0.1}(Ni_{0.4}Mn_{0.6})_{0.98}Nb_{0.02}O_{1.8}F_{0.2} with Al₂O₃ and MgF₂ coating layers. According to Raman spectrum analysis, the peak position difference between the Ni-O bond and the Mn-O bond in the prepared positive electrode active material is about 103cm⁻¹.

### Example 11

The composite metal salt precursor Ni_{0.4}Mn_{0.6}(OH)₂ is prepared by co-precipitation method.

Taking the stoichiometric ratio of Li_{0.9}Na_{0.1}(Ni_{0.4}Mn_{0.6})_{0.98}Nb_{0.02}O_{1.8}F_{0.2} as a benchmark, Ni_{0.4}Mn_{0.6}(OH)₂ is fully mixed with Li₂CO₃, LiF, Na₂C₂O₄, and Nb₂O₅ to obtain a mixture, where the total molar amount of Li in Li₂CO₃ and LiF is in excess of the benchmark by 3mol%.

The mixture is sintered at 425°C in an air atmosphere for 20h. After the sintering is completed, the sintered material is washed with water to remove alkaline impurities remained on the surface and then dried in an air atmosphere. The washed material is then mixed with MgF₂ and Li₂ZrO₃ for coating treatment at a temperature of 350 ° C to obtain a positive electrode active material. The positive electrode active material has an MgF₂ coating layer and a Li₂ZrO₃ coating layer. The coating amount of MgF₂ is 0.5wt% of the mass of the positive electrode active material, and the coating amount of Li₂ZrO₃ is 0.5wt% of the mass of the positive electrode active material.

By combining EDS energy spectrum and ICP analysis, it can be seen that the prepared positive electrode active material is Li_{0.9}Na_{0.1}(Ni_{0.4}Mn_{0.6})_{0.98}Nb_{0.02}O_{1.8}F_{0.2} with Li₂ZrO₃ and MgF₂ coating layers. According to Raman spectrum analysis, the peak position difference between the Ni-O bond and the Mn-O bond in the prepared positive electrode active material is about 100cm⁻¹.

### Example 12

The composite metal salt precursor Ni_{0.4}Mn_{0.6}(OH)₂ is prepared by co-precipitation method.

Taking the stoichiometric ratio of Li_{0.8}Na_{0.2}(Ni_{0.4}Mn_{0.6})_{0.98}Nb_{0.02}O_{1.8}F_{0.2} as a benchmark, Ni_{0.4}Mn_{0.6}(OH)₂ is fully mixed with Li₂CO₃, LiF, Na₂C₂O₄, and Nb₂O₅ to obtain a mixture, where the total molar amount of Li in Li₂CO₃ and LiF is in excess of the benchmark by 3mol%.

The mixture is sintered at 425°C in an air atmosphere for 22h. After the sintering is completed, the sintered material is washed with water to remove alkaline impurities remained on the surface and then dried in an air atmosphere. Then, the water-washed material is mixed with Al₂O₃ and subjected to a coating treatment, the temperature of the coating treatment being 350°C, obtaining a positive electrode active material. The positive electrode active material has an Al₂O₃ coating layer, and the coating amount of Al₂O₃ is 0.5wt% of the mass of the positive electrode active material.

By combining the EDS energy spectrum and the ICP analysis, it can be seen that the prepared positive electrode active material is Li_{0.8}Na_{0.2}(Ni_{0.4}Mn_{0.6})_{0.98}Nb_{0.02}O_{1.8}F_{0.2} with an Al₂O₃ coating layer. According to Raman spectrum analysis, the peak position difference between the Ni-O bond and the Mn-O bond in the prepared positive electrode active material is about 101cm⁻¹.

The prepared positive electrode active material is subjected to an X-ray diffraction test, and the result is shown in FIG. 3.

### Example 13

The difference of Example 13 from Example 2 is that the sintering temperature is 450°C.

By combining EDS energy spectrum and ICP analysis, it can be seen that the composition chemical formula of the prepared positive electrode active material is Li_{0.9}Na_{0.1}(Ni_{0.4}Mn_{0.6})_{0.98}Nb_{0.02}O_{1.8}F_{0.2}. According to Raman spectrum analysis, the peak position difference between the Ni-O bond and the Mn-O bond in the prepared positive electrode active material is about 106cm⁻¹.

### Example 14

The difference of Example 14 from Example 2 is that the prepared composite metal salt precursor is Ni_{0.2}Mn_{0.8}(OH)₂.

By combining the EDS energy spectrum and the ICP analysis, it can be seen that the prepared positive electrode active material is Li_{0.9}Na_{0.1}(Ni_{0.2}Mn_{0.8})_{0.98}Nb_{0.02}O_{1.8}F_{0.2} with an Al₂O₃ coating layer. According to Raman spectrum analysis, the peak position difference between the Ni-O bond and the Mn-O bond in the prepared positive electrode active material is about 102cm⁻¹.

### Example 15

The composite metal salt precursor Ni_{0.4}Mn_{0.6}(OH)₂ is prepared by co-precipitation method.

Taking the stoichiometric ratio of Li_{0.92}Na_{0.02}(Ni_{0.4}Mn_{0.6})_{0.9}Nb_{0.05}Al_{0.05}O_{1.9}F_{0.1} as a benchmark, Ni_{0.4}Mn_{0.6}(OH)₂ is fully mixed with Li₂CO₃, Li₂C₂O₄, LiF, Na₂C₂O₄, and Nb₂O₅ to obtain a mixture, where the total molar amount of Li in Li₂CO₃, Li₂C₂O₄, and LiF is in excess of the benchmark by 5mol%, and the molar ratio of Li₂CO₃ to Li₂C₂O₄ is 1:2.

The mixture is sintered at 350°C in an air atmosphere for 30h. After the sintering is completed, the sintered material is washed with water to remove alkaline impurities remained on the surface and then dried in an air atmosphere. Then, the water-washed material is mixed with Al₂O₃ and subjected to a coating treatment, the temperature of the coating treatment being 300 ° C, obtaining a positive electrode active material. The positive electrode active material has an Al₂O₃ coating layer, and the coating amount of Al₂O₃ is 0.5wt% of the mass of the positive electrode active material.

By combining the EDS energy spectrum and the ICP analysis, it can be seen that the prepared positive electrode active material is Li_{0.02}Na_{0.02}(Ni_{0.4}Mn_{0.6})_{0.9}Nb_{0.05}Al_{0.05}O_{1.9}F_{0.1} with an Al₂O₃ coating layer. According to Raman spectrum analysis, the peak position difference between the Ni-O bond and the Mn-O bond in the prepared positive electrode active material is about 103cm⁻¹.

According to FIG. 3, it can be seen that the diffraction peak position of the positive electrode active material prepared in Example 1 is consistent with that of the traditional spinel structure positive electrode material, but its crystallinity is far lower than that of the traditional spinel prepared by high-temperature sintering; and its full-width at half maximum of the characteristic peak is significantly greater, indicating that it has the characteristics of the spinel structure. At the same time, the main peak position of the positive electrode active material prepared in Example 1 is consistent with that of the layered positive electrode material, indicating that it also has the crystal structure of the layered positive electrode material, but it's two diffraction peaks located at the two split peak diffraction angles of the layered positive electrodes (006)/(102) and (108)/(110) are not significantly split apart, indicating that it is not a traditional layered positive electrode with highly ordered cations, and the disorder state of cations causes the two split peaks to appear as a single merged peak. Therefore, FIG. 3 can prove that the positive electrode active material provided by this scheme has the characteristics of local cation disorder.

In addition, by comparing the diffraction patterns of the positive electrode active materials prepared in Example 1, Example 2 and Example 12 in FIG. 3, it can be seen that the positive electrode active materials prepared in Example 1, Example 2 and Example 12 have similar characteristic peak positions and relative intensities. By comparing the positive electrode active materials prepared in Example 2 and Example 12, it can be seen that when the proportion of Na is increased from 10mol% to 20mol%, a characteristic peak located at 15° to 17° appears. Therefore, different Na contents in the positive electrode active material of the present application will present different Na phase characteristic peaks.

According to FIG. 4, for a charge and discharge process at the first-cycle current of 40mAg⁻¹ under 2.5V-4.7V vs Li/Li⁺, the positive electrode active material prepared in Example 1 has a capacity utilization significantly higher than that of the ordinary non-lithium-rich layered positive electrode (less than 3mAhg⁻¹) at a discharge voltage of 3.0V to 2.5V, and its capacity is greater than 8mAhg⁻¹, indicating that the positive electrode active material has the electrochemical characteristics of reduction from Mn⁴⁺ in the spinel structure to low-valent Mn ions and providing capacity. At the same time, its first-cycle discharge curve between 3.5V to 4.5V shows a significant upward-open parabolic slope discharge curve which resembles a layered solid solution reaction, rather than a platform-like two-phase reaction curve of a spinel, indicating that the material also has the characteristics of a layered structure. Therefore, FIG. 4 can further prove that the positive electrode active material provided by this scheme has the characteristics of local cation disorder.

### Comparative Example 1

The difference of Comparative Example 1 from Example 1 is that no Na₂C₂O₄ is added for sintering.

By combining the EDS energy spectrum with the ICP analysis, it can be seen that the prepared positive electrode active material is Li(Ni_{0.3}Mn_{0.7})_{0.98}Nb_{0.02}O_{1.8}F_{0.2} with an Al₂O₃ coating layer. According to Raman spectrum analysis, the peak position difference between the Ni-O bond and the Mn-O bond in the prepared positive electrode active material is about 116cm⁻¹.

### Comparative Example 2

The difference of Comparative Example 2 from Example 2 is that no Na₂C₂O₄ is added for sintering.

By combining the EDS energy spectrum and the ICP analysis, it can be seen that the prepared positive electrode active material is Li(Ni_{0.4}Mn_{0.6})_{0.98}Nb_{0.02}O_{1.8}F_{0.2} with an Al₂O₃ coating layer. According to Raman spectrum analysis, the peak position difference between the Ni-O bond and the Mn-O bond in the prepared positive electrode active material is about 118cm⁻¹.

### Comparative Example 3

The difference of Comparative Example 3 from Example 4 is that no Na₂C₂O₄ is added for sintering.

By combining the EDS energy spectrum and the ICP analysis, it can be seen that the prepared positive electrode active material is Li(Ni_{0.5}Mn_{0.5})_{0.98}Nb_{0.02}O_{1.8}F_{0.2} with an Al₂O₃ coating layer. According to Raman spectrum analysis, the peak position difference between the Ni-O bond and the Mn-O bond in the prepared positive electrode active material is about 126cm⁻¹.

### Comparative Example 4

The difference of Comparative Example 4 from Example 2 is that the sintering temperature is 600°C.

By combining the EDS energy spectrum and the ICP analysis, it can be seen that the prepared positive electrode active material is Li_{0.9}Na_{0.1}(Ni_{0.4}Mn_{0.6})_{0.98}Nb_{0.02}O_{1.8}F_{0.2} with an Al₂O₃ coating layer. According to Raman spectrum analysis, the peak position difference between the Ni-O bond and the Mn-O bond in the prepared positive electrode active material is about 65cm⁻¹.

### Comparative Example 5

The difference of Comparative Example 5 from Example 2 is that no LiF is added for sintering.

By combining the EDS energy spectrum and the ICP analysis, it can be seen that the prepared positive electrode active material is Li_{0.9}Na_{0.1}(Ni_{0.4}Mn_{0.6})_{0.98}Nb_{0.02}O₂ with an Al₂O₃ coating layer. According to Raman spectrum analysis, the peak position difference between the Ni-O bond and the Mn-O bond in the prepared positive electrode active material is about 121cm⁻¹.

### Comparative Example 6

The difference of Comparative Example 6 from Example 2 is that no Nb₂O₅ is added for sintering.

By combining the EDS energy spectrum and the ICP analysis, it can be seen that the prepared positive electrode active material is Li_{0.9}Na_{0.1}Ni_{0.4}Mn_{0.6}O_{1.8}F_{0.2} with an Al₂O₃ coating layer. According to Raman spectrum analysis, the peak position difference between the Ni-O bond and the Mn-O bond in the prepared positive electrode active material is about 125cm⁻¹.

### Comparative Example 7

The difference of Comparative Example 7 from Example 2 is that Ni_{0.4}Mn_{0.6}(OH)₂ is mixed with Li₂CO₃, LiF, Na₂C₂O₄ and Nb₂O₅ and sintered, taking the stoichiometric ratio of Li_{0.9}Na_{0.1}(Ni_{0.4}Mn_{0.6})_{0.8}Nb_{0.1}Al_{0.1}O_{1.8}F_{0.2} as a benchmark.

By combining the EDS energy spectrum and the ICP analysis, it can be seen that the prepared positive electrode active material is Li_{0.9}Na_{0.1}(Ni_{0.4}Mn_{0.6})_{0.8}Nb_{0.1}Al_{0.1}O_{1.8}F_{0.2} with an Al₂O₃ coating layer. According to Raman spectrum analysis, the peak position difference between the Ni-O bond and the Mn-O bond in the prepared positive electrode active material is about 128cm⁻¹.

### Comparative Example 8

The difference of Comparative Example 8 from Example 2 is that Ni_{0.4}Mn_{0.6}(OH)₂ is mixed with Li₂CO₃, LiF, Na₂C₂O₄and Nb₂O₅ and sintered, taking the stoichiometric ratio of Li_{0.7}Na_{0.3}(Ni_{0.4}Mn_{0.6})_{0.98}Nb_{0.02}O_{1.8}F_{0.2} as a benchmark.

By combining the EDS energy spectrum and the ICP analysis, it can be seen that the prepared positive electrode active material is Li_{0.7}Na_{0.3}(Ni_{0.4}Mn_{0.6})_{0.98}Nb_{0.02}O_{1.8}F_{0.2} with an Al₂O₃ coating layer. According to Raman spectrum analysis, the peak position difference between the Ni-O bond and the Mn-O bond in the prepared positive electrode active material is about 126cm⁻¹.

### Comparative Example 9

The difference of Comparative Example 9 from Example 2 is that Ni_{0.4}Mn_{0.6}(OH)₂ is mixed with Li₂CO₃, LiF, Na₂C₂O₄ and Nb₂O₅ and sintered, taking the stoichiometric ratio of Li_{0.98}Na_{0.02}(Ni_{0.4}Mn_{0.6})_{0.98}Nb_{0.02}O_{1.8}F_{0.2} as a benchmark.

By combining the EDS energy spectrum and the ICP analysis, it can be seen that the prepared positive electrode active material is Li_{0.98}Na_{0.02}(Ni_{0.4}Mn_{0.6})_{0.98}Nb_{0.02}O_{1.8}F_{0.2} with an Al₂O₃ coating layer. According to Raman spectrum analysis, the peak position difference between the Ni-O bond and the Mn-O bond in the prepared positive electrode active material is about 118cm⁻¹.

### Comparative Example 10

The difference of Comparative Example 10 from Example 2 is that Ni_{0.4}Mn_{0.6}(OH)₂ is mixed with Li₂CO₃, LiF, Na₂C₂O₄ and Nb₂O₅ and sintered, taking the stoichiometric ratio of Li_{0.9}Na_{0.1}(Ni_{0.4}Mn_{0.6})_{0.98}Nb_{0.02}O_{1.5}F_{0.5} as a benchmark.

By combining the EDS energy spectrum and the ICP analysis, it can be seen that the prepared positive electrode active material is Li_{0.9}Na_{0.1}(Ni_{0.4}Mn_{0.6})_{0.98}Nb_{0.02}O_{1.5}F_{0.5} with an Al₂O₃ coating layer. According to Raman spectrum analysis, the peak position difference between the Ni-O bond and the Mn-O bond in the prepared positive electrode active material is about 116cm⁻¹.

### Comparative Example 11

The difference of Comparative Example 11 from Example 2 is that Ni_{0.4}Mn_{0.6}(OH)₂ is mixed with Li₂CO₃, LiF, Na₂C₂O₄ and Nb₂O₅ and sintered, taking the stoichiometric ratio of Li_{1.1}Na_{0.1}(Ni_{0.4}Mn_{0.6})_{0.98}Nb_{0.02}O_{1.8}F_{0.2} as a benchmark.

By combining the EDS energy spectrum and the ICP analysis, it can be seen that the prepared positive electrode active material is Li_{1.1}Na_{0.1}(Ni_{0.4}Mn_{0.6})_{0.08}Nb_{0.02}O_{1.8}F_{0.2} with an Al₂O₃ coating layer. According to Raman spectrum analysis, the peak position difference between the Ni-O bond and the Mn-O bond in the prepared positive electrode active material is about 73cm⁻¹. This is because the lithium proportion is too high, which causes the material to transit from a disordered state to an ordered state more quickly. Therefore, under the same sintering condition, the disorder degree is significantly reduced.

### Comparative Example 12

The difference of Comparative Example 12 from Example 2 is that Ni_{0.4}Mn_{0.6}(OH)₂ is mixed with Li₂CO₃, LiF, Na₂C₂O₄ and Nb₂O₅ and sintered, taking the stoichiometric ratio of Li_{0.9}Na_{0.1}(Ni_{0.4}Mn_{0.6})₁Nb_{0.02}O_{1.8}F_{0.2} as a benchmark.

By combining the EDS energy spectrum and the ICP analysis, it can be seen that the prepared positive electrode active material is Li_{0.9}Na_{0.1}(Ni_{0.4}Mn_{0.6})₁Nb_{0.02}O_{1.8}F_{0.2} with an Al₂O₃ coating layer. According to Raman spectrum analysis, the peak position difference between the Ni-O bond and the Mn-O bond in the prepared positive electrode active material is about 116cm⁻¹.

Among them, the ICP analysis results of the positive electrode active materials prepared in Examples 1 to 15 and Comparative Examples 1 to 12 are shown in Table 1, which shows the mass fractions of respective elements in the positive electrode active material (the rest is the mass fraction of oxygen element), and the sum of the mass fractions of respective elements and the mass fraction of oxygen element is 100%.

**Table 1**

| | Ni | Mn | Li | Na | Al | Nb | Mo | Te | Ti | Zr | Mg | F | S |
|---|---|---|---|---|---|---|---|---|---|---|---|---|---|
| Example 1 | 17.53 | 38.29 | 6.34 | 2.34 | 0.26 | 1.89 | - | - | - | - | - | 3.86 | - |
| Example 2 | 23.28 | 32.69 | 6.32 | 2.33 | 0.26 | 1.88 | - | - | - | - | - | 3.85 | - |
| Example 3 | 26.15 | 29.91 | 6.31 | 2.32 | 0.26 | 1.88 | - | - | - | - | - | 3.84 | - |
| Example 4 | 29.00 | 27.14 | 6.30 | 2.32 | 0.26 | 1.87 | - | - | - | - | - | 3.83 | - |
| Example 5 | 23.28 | 32.82 | 6.34 | 2.34 | 0.26 | 1.89 | - | - | - | - | - | 3.86 | - |
| Example 6 | 17.24 | 38.29 | 6.34 | 2.34 | 0.26 | 1.89 | - | - | - | - | - | 1.93 | 3.25 |
| Example 7 | 23.27 | 32.67 | 6.32 | 2.33 | 0.26 | - | 1.94 | - | - | - | - | 3.84 | - |
| Example 8 | 21.07 | 29.59 | 6.23 | 2.29 | 0.80 | 1.85 | 1.91 | 2.55 | 0.96 | - | - | 3.79 | - |
| Example 9 | 23.40 | 32.86 | 6.35 | 2.34 | - | 1.89 | - | - | - | - | - | 3.87 | - |
| Example 10 | 23.20 | 32.58 | 6.30 | 2.32 | 0.26 | 1.87 | - | - | - | - | 0.12 | 4.03 | - |
| Example 11 | 23.14 | 32.49 | 6.35 | 2.31 | - | 1.87 | - | - | - | 0.46 | 0.12 | 4.01 | - |
| Example 12 | 22.91 | 32.17 | 5.53 | 4.58 | 0.26 | 1.85 | - | - | - | - | - | 3.78 | - |
| Example 13 | 23.28 | 32.69 | 6.32 | 2.33 | 0.26 | 1.88 | - | - | - | - | - | 3.85 | - |
| Example 14 | 11.73 | 43.92 | 6.37 | 2.35 | 0.27 | 1.89 | - | - | - | - | - | 3.87 | - |
| Example 15 | 21.81 | 30.63 | 6.92 | 0.47 | 1.66 | 4.80 | - | - | - | - | - | 1.96 | - |
| Comparative Example 1 | 17.81 | 38.90 | 7.16 | - | 0.27 | 1.92 | - | - | - | - | - | 3.92 | - |
| Comparative Example 2 | 23.65 | 33.21 | 7.14 | - | 0.27 | 1.91 | - | - | - | - | - | 3.91 | - |
| Comparative Example 3 | 29.46 | 27.57 | 7.11 | - | 0.27 | 1.90 | - | - | - | - | - | 3.89 | - |
| Comparative Example 4 | 23.28 | 32.69 | 6.32 | 2.33 | 0.26 | 1.88 | - | - | - | - | - | 3.85 | - |
| Comparative Example 5 | 23.41 | 32.87 | 6.36 | 2.34 | 0.27 | 1.89 | - | - | - | - | - | - | - |
| Comparative Example 6 | 23.72 | 33.31 | 6.44 | 2.37 | 0.27 | - | - | - | - | | - | 3.84 | - |
| Comparative Example 7 | 23.29 | 32.70 | 6.32 | 2.33 | 3.00 | 9.40 | - | - | - | - | - | 3.85 | - |
| Comparative Example 8 | 22.55 | 31.66 | 4.76 | 6.76 | 0.26 | 1.82 | - | - | - | - | - | 3.72 | - |
| Comparative Example 9 | 23.59 | 33.12 | 6.97 | 0.47 | 0.27 | 1.91 | - | - | - | - | - | 3.90 | - |
| Comparative Example 10 | 23.07 | 32.40 | 6.26 | 2.31 | 0.26 | 1.86 | - | - | - | - | - | 9.53 | - |
| Comparative Example 11 | 22.96 | 32.24 | 7.62 | 2.30 | 0.26 | 1.85 | - | - | - | - | - | 3.79 | - |
| Comparative Example 12 | 23.02 | 32.32 | 6.25 | 2.30 | 0.26 | 1.86 | - | - | - | - | - | 3.80 | - |

According to Table 1, the corresponding atomic weight ratio of each element is calculated by conversion of the mass ratio of each element. Based on the fact that the atomic weight ratio difference between each element in the positive electrode active material and the corresponding element in the theoretical finished product is within ±3%, it can be proved that the prepared positive electrode active material is consistent with the design value.

### Application Example

The positive electrode active materials prepared in Examples 1 to 15 are used for preparing secondary battery samples 1 to 15 in sequence.

### Application Comparison Example

The positive electrode active materials prepared in Comparative Examples 1 to 12 are used for preparing secondary battery samples 16 to 27 in sequence.

The above samples are prepared by the same method. The specific steps include: mixing the positive electrode active material with a conductive agent Super-P and a binder PVDF at a mass ratio of 92: 4: 4, adding an appropriate amount of NMP solution to form a slurry, applying the slurry on an aluminum foil, drying and then baking in a vacuum oven at 150°C for 12 hours, and then assembling to obtain a secondary battery in an Ar atmosphere glove box, where metallic lithium is used as a negative electrode and 1mol/L LiPF₆ is dissolved in a mixed organic solvent with a volume ratio of EC: EMCto be 3:7 to obtain an electrolyte, assembling them into a button-type CR2032 battery.

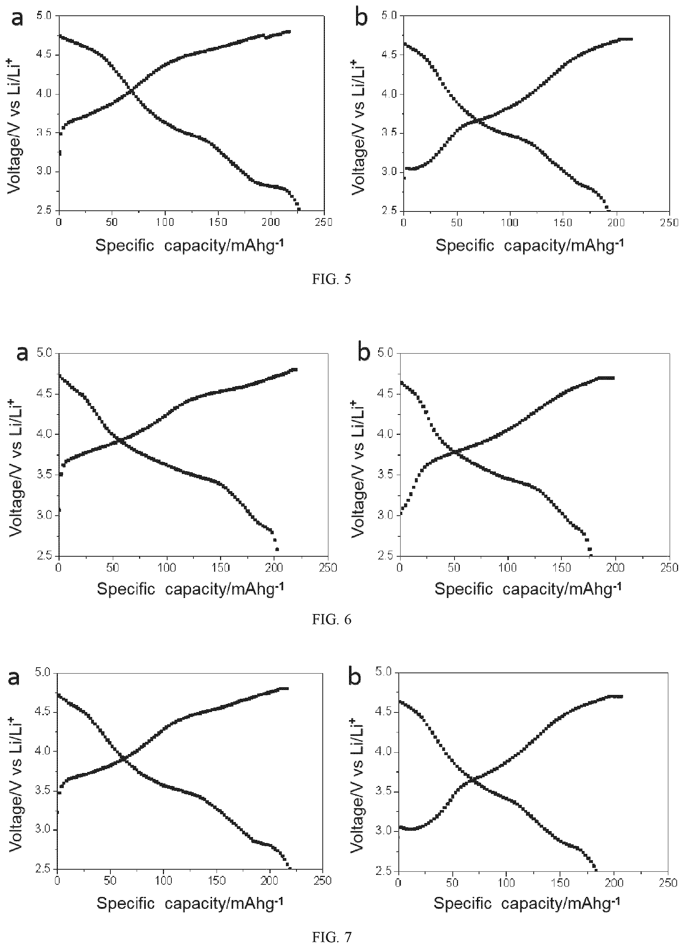

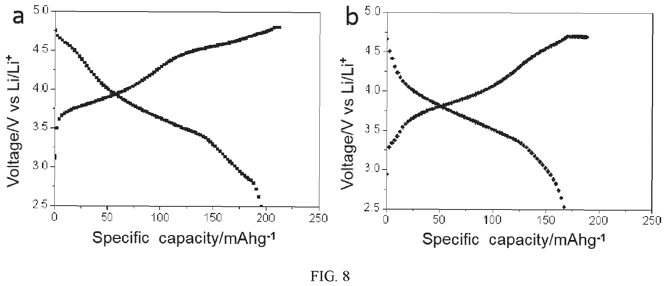

Using a charge-discharge mode of constant current and constant voltage charge plus constant current discharge and a current density of 1C=200mAg⁻¹, performance tests are carried out on Sample 1, Sample 2, Sample 16 and Sample 17 at two current densities of 0.2C and 0.5C under a voltage window of 2.5V to 4.7V. The test results are shown in FIG. 5 to FIG. 8. According to FIG. 5 to FIG. 8, it can be seen that the discharge capacities of Sample 1 and Sample 2 are significantly higher than those of Sample 16 and Sample 17, respectively.

Using the charge-discharge mode of constant current and constant voltage charge plus constant current discharge and a current density of 1C=200mAg⁻¹, the first-cycle charge-discharge activation is performed at a rate of 0.2C under a voltage window of 2.5V to 4.7V and a rate test is carried out on Samples 1-27; and then, a 100 cycles test at a voltage range of 2.5V to 4.5V and a rate of 0.5C is carried out. The test results are shown in Table 2, where the initial coulombic efficiency, one of the performance indicators for quantifying the negative electrode material of lithium-ion battery, is defined as a ratio of the discharge capacity to the charge capacity of lithium-ion battery in the first charge-discharge cycle; and the battery capacity is defined as the amount of electricity discharged by the battery under a certain condition (discharge rate, temperature, termination voltage, etc.).

**Table 2**

| | Specific capacity for first-cycle discharge at 0.2C and 2.5V-4.7V (mAg-1) | Initial coulombic efficiency (%) | Specific capacity for first-cycle discharge at 0.5C and 2.5V-4.7V (mAg-1) | Capacity retention rate after 100 cycles at 0.5C and 2.5V-4.7V (%) |
|---|---|---|---|---|
| Sample 1 | 227.1 | 104.6 | 192.4 | 92.1 |
| Sample 2 | 214.1 | 95.5 | 187.3 | 91.0 |
| Sample 3 | 213.8 | 96.5 | 186.2 | 91.5 |
| Sample 4 | 210.3 | 95.4 | 164.5 | 92.2 |
| Sample 5 | 212.3 | 94.6 | 189.6 | 91.6 |
| Sample 6 | 214.2 | 95.1 | 190.2 | 92.5 |
| Sample 7 | 218.5 | 97.2 | 194.4 | 92.6 |
| Sample 8 | 211.5 | 93.0 | 187.2 | 94.3 |
| Sample 9 | 215.3 | 96.8 | 191.4 | 92.6 |
| Sample 10 | 214.6 | 96.1 | 193.5 | 93.0 |
| Sample 11 | 213.1 | 96.0 | 193.6 | 93.2 |
| Sample 12 | 225.6 | 97.9 | 200.3 | 92.8 |
| Sample 13 | 211.1 | 95.5 | 189.2 | 91.3 |
| Sample 14 | 214.5 | 96.6 | 196.8 | 92.3 |
| Sample 15 | 209.6 | 94.8 | 190.4 | 91.5 |
| Sample 16 | 206.2 | 98.2 | 184.9 | 89.8 |
| Sample 17 | 195.5 | 92.0 | 165.6 | 87.6 |
| Sample 18 | 186.2 | 90.8 | 160.8 | 86.5 |
| Sample 19 | 165.5 | 82.8 | 146.5 | 80.8 |
| Sample 20 | 200.8 | 88.1 | 174.8 | 88.5 |
| Sample 21 | 198.6 | 89.2 | 176.5 | 86.5 |
| Sample 22 | 205.8 | 91.6 | 185.5 | 84.6 |
| Sample 23 | 203.9 | 90.3 | 184.0 | 87.2 |
| Sample 24 | 198.7 | 87.5 | 179.7 | 85.5 |
| Sample 25 | 204.5 | 93.2 | 186.6 | 83.8 |
| Sample 26 | 200.3 | 91.3 | 180.2 | 85.6 |
| Sample 27 | 203.1 | 91.0 | 184.2 | 82.8 |

According to Table 2, it can be seen that, the secondary battery prepared from the positive electrode active material of the present application not only has high specific capacity and high cycle stability at the high voltage window, the capacity retention rate being up to about 91% or more after 100 cycles at 2.5V to 4.7V and a rate of 0.5C, and but also has a low cost, making the prepared secondary battery highly cost-effective.

In Comparative Examples 1 to 3, 5 to 10 and 12, since the peak position difference between the Ni-O bond and the Mn-O bond is greater than 110 cm⁻¹, the disorder degree of the material is too high, which aggravates the side reactions at the material interface and reduces the compaction density of the prepared electrode sheet; accordingly, the stability of the battery is reduced and the practicality is poor. In Comparative Examples 4 and 11, since the peak position difference between the Ni-O bond and the Mn-O bond is less than 80 cm⁻¹, the disorder degree of the material is too low, resulting in poor structural stability of the material under high voltage and a significant decrease in power performance; accordingly, the capacity utilization of the battery is insufficient at high rates.

The technical features of the above-described embodiments may be arbitrarily combined. To make the description concise, not all possible combinations of the technical features in the above-described embodiments are described. However, as long as there is no contradiction in the combinations of these technical features, they should be considered to be within the scope of this specification.

The above-described examples merely express several implementations of the present application, and the description thereof is relatively specific and detailed, but it should not be construed as limiting the scope of the patent application. It should be pointed out that, for persons of ordinary skill in the art, several modifications and improvements can be made without departing from the concept of the present application, which all fall within the scope of protection of the present application. Therefore, the protection scope of this patent application should be based on the attached claims.

## Claims

1. A positive electrode active material, wherein the positive electrode active material has a composition chemical formula of LiₓNa₁₋ₓA_{y}B_{1-y}O₂₋ₙDₙ, A is selected from a combination of Ni and Mn, B is selected from at least one non-alkali metal positive-valence element other than Ni, Mn, Co, and S, D is selected from F and/or S, x is greater than or equal to 0.8 and less than or equal to 0.92, y is greater than or equal to 0.90 and less than 1.0, n is greater than 0 and less than or equal to 0.2, and a peak position difference between a Ni-O bond and a Mn-O bond of the positive electrode active material in a Raman spectrum is greater than 80cm⁻¹ and less than 110cm⁻¹.

2. The positive electrode active material according to claim 1, wherein a molar ratio of Ni to Mn is 3:7 to 1: 1.

3. The positive electrode active material according to claim 1 or 2, wherein B is selected from at least one of Mg, Al, Zr, Ce, Cr, La, P, Ti, Ta, Nb, W, Mo, or Te.

4. The positive electrode active material according to any one of claims 1 to 3, wherein the B is present in a doped form and is selected from at least one of Al, Cr or Ti.

5. The positive electrode active material according to any one of claims 1 to 3, wherein the B is present in a doped form and is selected from at least one of Zr, La, or P.

6. The positive electrode active material according to any one of claims 1 to 3, wherein the B is present in a doped form and is selected from at least one of Ta, Nb, W, Mo, Te, or Ce.

7. The positive electrode active material according to any one of claims 1 to 3, wherein the B is selected from high-valence elements with a valence of +5 or more.

8. The positive electrode active material according to any one of claims 1 to 7, wherein B comprises at least Nb or Mo, and D comprises at least F.

9. The positive electrode active material according to any one of claims 1 to 8, wherein a crystal structure of the positive electrode active material is a lithiated spinel-layered composite crystal structure.

10. The positive electrode active material according to claim 9, wherein a crystal structure surface of the positive electrode active material further has a coating layer, and the coating layer is selected from at least one of an inert oxide coating layer, a lithium-containing transition metal oxide coating layer, a phosphate coating layer, or a fluoride coating layer.

11. The positive electrode active material according to claim 10, wherein when the peak position difference between the Ni-O bond and the Mn-O bond of the positive electrode active material in the Raman spectrum is less than 110 cm⁻¹ and greater than 100 cm⁻¹, the coating layer is selected from at least one of the inert oxide coating layer, the phosphate coating, or the fluoride coating layer.

12. The positive electrode active material according to claim 10, wherein when the peak position difference between the Ni-O bond and the Mn-O bond of the positive electrode active material in the Raman spectrum is greater than 80 cm⁻¹ and less than or equal to 100 cm⁻¹, the coating layer is selected from the lithium-containing transition metal oxide coating layer.

13. The positive electrode active material according to any one of claims 10 to 12, wherein a coating amount of the coating layer is 0.5wt%-1wt% of a mass of the positive electrode active material.

14. The positive electrode active material according to any one of claims 10 to 13, wherein the inert oxide coating layer is selected from a composite of Al₂O₃ and TiO₂.

15. The positive electrode active material according to claim 10, wherein the lithium-containing transition metal oxide coating layer is selected from Li₁₊ₐZrO₂₊ₐ, a being greater than 0 and less than or equal to 1.0.

16. The positive electrode active material according to any one of claims 10 to 15, wherein the fluoride coating layer is selected from MgF₂.

17. A method for preparing the positive electrode active material according to any one of claims 1 to 16, comprising the following steps:
preparing a composite metal salt precursor of Ni and Mn;
taking LiₓNa₁₋ₓA_{y}B_{1-y}O₂₋ₙDₙ as a benchmark, wherein x is greater than or equal to 0.8 and less than or equal to 0.92, y is greater than or equal to 0.90 and less than 1.0, and n is greater than 0 and less than or equal to 0.2, and mixing the composite metal salt precursor of Ni and M with a lithium salt, a sodium salt and an inorganic salt containing any non-alkali metal positive element other than Ni, Mn, Co and S to obtain a mixture, wherein at least one of the lithium salt, the sodium salt and the inorganic salt contains a negative-valent element D, and the negative-valent element D is selected from F and/or S;
sintering the mixture at 300°C to 500°C to obtain the positive electrode active material.

18. The method for preparing the positive electrode active material according to claim 17, wherein a molar ratio of Ni to Mn in the composite metal salt precursor of Ni and Mn is 3:7 to 1:1.19. The method for preparing the positive electrode active material according to claim 17 or 18, wherein a molar amount of lithium in the lithium salt is within an excess of 5mol% relative to the benchmark.

19. The method for preparing the positive electrode active material according to any one of claims 17 to 19, wherein a sintering time is 10h to 30h.

20. The method for preparing the positive electrode active material according to any one of claims 17 to 20, wherein the lithium salt is selected from at least two of lithium carbonate, lithium hydroxide, lithium oxalate, lithium nitrate, and lithium fluoride.

21. The method for preparing the positive electrode active material according to any one of claims 17 to 21, wherein the sodium salt is selected from at least one of sodium carbonate, sodium oxalate and sodium sulfide.

22. The method for preparing the positive electrode active material according to claim 21, wherein when the lithium salt is selected from a combination of lithium carbonate and lithium oxalate, a molar ratio of the lithium carbonate to the lithium oxalate is 1:2 to 2:1.

23. The method for preparing the positive electrode active material according to any one of claims 17 to 23, wherein after the mixture is sintered at 300°C to 500°C for 10h to 30h, the method further comprises a coating treatment, a coating treatment temperature being 300°C to 400°C.

24. The method for preparing the positive electrode active material according to claim 24, wherein a sintering temperature is 350°C to 400°C.

25. The method for preparing the positive electrode active material according to claim 24, wherein the sintering temperature is 400°C to 450°C.

26. The method for preparing the positive electrode active material according to any one of claims 24 to 26, wherein a sintering time is 15h to 25h.

27. The method for preparing the positive electrode active material according to any one of claims 24 to 26, wherein when lithium remains on a surface of a sinter, residual lithium is directly coated with a lithium-containing transition metal oxide through a coating treatment.

28. A positive electrode sheet, comprising a positive electrode current collector and a positive electrode material layer disposed on a surface of the positive electrode current collector, wherein the positive electrode material layer comprises the positive electrode active material according to any one of claims 1 to 16.

29. The positive electrode sheet according to claim 29, wherein the positive electrode material layer further comprises a conductive agent and a binder.

30. A secondary battery, comprising the positive electrode sheet according to claim 29 or 30.

31. The secondary battery according to claim 31, further comprising a negative electrode sheet, a separator and an electrolyte.
